# FASCICULE DE BREVET EUROPEEN

(11) **EP 0 925 722 B1**
(45) Date de publication et mention de la délivrance du brevet: **15.10.2003**
(21) Numéro de dépôt: 97203996.0
(22) Date de dépôt: 18.12.1997
(51) Int. Cl.: A23G 9/02

(54) **Article de confiserie glacée et procédé de fabrication**
Beschichteter Konfektartikel und Verfahren zur Herstellung
Coated confectionery article and method of production

(43) Date de publication de la demande: 30.06.1999
(73) Titulaire: SOCIETE DES PRODUITS NESTLE S.A., 1800 Vevey (CH)
(72) Inventeur: Sunderland, Charles-Austin, 60000 Goincourt (FR); Amiel, Olivier, 92600 Asnières (FR)
(74) Mandataire: Archambault, Jean

(56) Documents cités:
- EP-A- 0 295 865
- WO-A-95/20883
- AU-A- 4 866 369
- DE-A- 4 322 927
- GB-A- 201 100
- GB-A- 846 777
- US-A- 1 813 099
- US-A- 4 708 881
- DATABASE WPI Section Ch, Week 8618 Derwent Publications Ltd., London, GB; Class D13, AN 86-115920 XP002058237 & JP 61 056 045 A (MEIJI MILK PROD CO LTD) , 20 mars 1986 -& PATENT ABSTRACTS OF JAPAN vol. 10, no. 219, 31 juillet 1986 & JP 61 056045 A
- DATABASE WPI Section Ch, Week 8639 Derwent Publications Ltd., London, GB; Class D13, AN 86-255879 XP002058238 & JP 61 185 176 A (AJINOMOTO REITO SHO) , 18 août 1986
- "L'Art Culinaire Français" 1976 , FLAMMARION , PARIS XP002058236 * page 687 *

## Description

L'invention a trait à un article de confiserie glacée enrobé de pâte et à un procédé de fabrication d'un tel article.

Il existe des articles de pâtisserie glacée comprenant un noyau de confiserie glacée enrobé d'une pâte, notamment du type à beignets qui est cuite à grande friture. Habituellement, le noyau de crème glacée est entouré d'une couche mince de pâte non levée et le tout est plongé dans une matière grasse bouillante pour cuire et dorer cette pâte. L'article doit être consommé rapidement car il n'y a pas de protection de la crème glacée contre les échanges thermiques puisqu'elle est en contact direct avec la pâte d'enrobage chaude et celle-ci fond en partie pendant la préparation. Pour fabriquer ce genre de produit industriellement et pouvoir le transporter et le distribuer, il est nécessaire de s'affranchir de cette difficulté.

On a proposé différentes solutions pour isoler thermiquement le noyau de la pâte:

Dans la demande de brevet EP-A-217409, par exemple, on réalise un article semi-manufacturé destiné à être frit par le consommateur lui-même, comprenant un noyau de crème glacée enrobé d'une composition d'enrobage multi-couches adaptée à la cuisson à grande friture, comprenant une première couche liquide adhérente au noyau dans laquelle une seconde couche de chapelure est intégrée et cette seconde couche est elle-même recouverte d'une troisième couche de pâte liquide, le tout étant ensuite congelé.

Selon le brevet US-A-4708881, par exemple, on peut fabriquer des croquettes de crème ou des articles de crème glacée décorés en réalisant la congélation en freezer, tunnel ou gyrofreezer en deux étapes. Ainsi, on congèle d'abord un noyau dans des conditions de température produisant un maximum de cristaux de glace, puis on décore ou enrobe ce noyau dans une opération intermédiaire réalisée à l'extérieur du freezer et on traite le produit composite dans le même freezer à plus basse température. Bien qu'il soit indiqué que l'on peut enrober le noyau d'une composition liquide et frire l'ensemble, ces opérations ne sont pas décrites.

Dans la demande de brevet FR-A-2353229, on forme un noyau de crème glacée que l'on enveloppe dans une abaisse composite de pâte laminée avec une couche continue de matière protectrice faisant face au noyau et isolant la pâte du noyau, on congèle l'ensemble et on the cuit.

GB-A-201 100 décrit un article de confiserie glacée comprenant une pâte à gauffre crue enrobant entièrement un centre de crème glacée ainsi qu'un procédé de préparation. Le procédé comprend la cuisson rapide d'une pâte à gauffre enrobant entièremant le noyau de crème glacée dans un moule métallique en deux demi-coques, le démoulage rapide par ouverture des demi-coques, l'emballage et la congélation. Dans une variante, le noyau congelé peut être roulé dans la pâte liquide et le produit ainsi enrobé de pâte roulé ensuite sur une plaque métallique de cuisson chauffée.

DE-A-4 322 927 a trait à un produit de crème glacée en portions en forme de boule comprenant un noyau de crème glacée mis en forme dans une masse d'enrobage propre à la cuisson. Dans l'antériorité, la boule de crème glacée est entièrement entourée d'un enrobage multi-couches adaptée à la cuisson à grande friture chez soi de manière à réaliser une coque croustillante englobant le noyau de crème glacée. Dans le procédé de préparation, le noyau congelé est d'abord roulé à sec dans une poudre de sucre et de canelle, refroidi pour fair adhérer le sucre, plongé dans une panure conventionnelle à base d'un mélange de miettes de pain grillé, d'eau, de beurre et de jaune d'oeuf. Après égouttage de l'excédent de panure, enrobage dans une poudre de noisettes, refroidissement pour congeler, on trempe une seconde fois dans la panure, on enrobe de flocons de noix de coco et on congèle. Pour consommer le produit à la maison, on frit les boules à grande friture.

AU-A-48 663 69 décrit un produit de crème glacée composite comprenant une assiette de service ou un plat support en gaufrette sur lequel est disposée une portion de crème glacée recouverte de blanc d'oeuf battu et qui est cuit au four. La crème glacée est recouverte seulement sur le dessus avec du blanc d'oeuf battu cuit. Pour sa préparation, le produit est simplement passé rapidement au four.

L'invention se propose de mettre à disposition un article de confiserie glacée constitué d'un noyau de composition glacée enrobé de pâte cuite ne nécessitant pas de couche intermédiaire servant de barrière thermique isolant le noyau de la pâte et ceci sans que la pâte ne soit imbibée de liquide provenant de la fusion de la composition glacée.

L' article de confiserie glacée selon l'invention est caractérisé par le fait qu'il est constitué:
- d'un noyau de composition glacée et
- d'un enrobage adhérant à la surface dudit noyau,
que ledit enrobage comprend une pâte cuite aérée contenant de la meringue, que ladite pâte est foisonnée de 20 à 150 % en volume et qu'elle a une densité de 0,45 à 0,95 g/cm ³ avant cuisson,
que ladite pâte a une épaisseur telle qu'elle forme une barrière thermique qui protége le noyau pendant la friture de la pâte dans une huile à 180° C pendant 45s et que ladite pâte est congelée après avoir été frite.

Dans un mode de réalisation particulier, l'article selon l'invention est une sucette comprenant un noyau dont la forme comporte des parties concaves, c'est-à-dire en creux et un bâtonnet de préhension. Ainsi, la sucette glacée se présente sous la forme d'un beignet torique.

Dans le contexte de l'invention, une pâte dite "à frire" est généralement une pâte à beignet ou à crêpe classique à base de farine, d'oeuf, de lait, de sucre, d'huile, d'eau et de sel.

La composition d'enrobage comprend une meringue, c'est à dire un mélange de blanc d'oeuf et de sucre contenant, de préférence de 30 à 40 % en poids de sucre pour 60 à 70 % en poids de blanc d'oeuf. Dans la meringue, le blanc d'oeuf est battu, de manière à aérer la meringue. On utilise de préférence du blanc d'oeuf pasteurisé ou tout substitut du blanc d'oeuf du point de vue des propriétés fonctionnelles, en particulier du pouvoir moussant et de l'aptitude à gélifier sous l'effet de la chaleur. Un tel substitut peut, par exemple, être à base de protéine de lactosérum ou de soja. On peut également utiliser un mélange de cellulose modifiée et/ou d'hydrocolloïdes, par exemple de cellulose modifiée et de gomme xanthane ou de gomme guar. La densité de la meringue est de préférence environ 0,2 g/cm3.

Dans la composition d'enrobage, la meringue représente 5 à 30 % en poids pour 70 à 95 % en poids de pâte à frire et de préférence environ 10 % en poids pour environ 90 % en poids de pâte à frire.

En variante, on peut effectuer le mélange des ingrédients constitutifs de la meringue directement dans la pâte à frire et ensuite l'aérer ou la monter.

Ainsi, la composition d'enrobage est foisonnée de 20 à 150 % en volume, c'est à dire quelle a une densité de 0,45 à 0,95 g/cm3 et de préférence d'environ 0,9 g/cm3.

La composition d'enrobage mise en oeuvre selon l'invention est remarquable en ce qu'elle permet un enrobage régulier d'épaisseur uniforme par trempage d'un noyau congelé de composition glacée de forme quelconque, même dans le cas où celui-ci comporte des parties convexes et des parties concaves, en particulier quant il est troué de part en part comme par exemple un tore, et celà du fait de sa fluidité.

De plus, cette composition d'enrobage a la faculté de former une barrière thermique contre les transferts de chaleur intenses comme par exemple ceux provoqués par une cuisson à grande friture. On a constaté par exemple, qu'à la fin d'une friture à 180° C pendant 45 s. dans l'huile, la température du noyau de confiserie glacée demeurait < à environ - 20° C. Ainsi, l'on peut passer directement du trempage du noyau congelé dans la composition d'enrobage à la friture dans l'huile sans recourir à un durcissement intermédiaire par congélation.

Un autre avantage est la possibilité, par exemple dans le cas spécifique d'une sucette en forme de tore, de manipuler l'article par le bâtonnet jusqu'à l'étape de friture comprise, sans que l'ancrage du bâtonnet dans le noyau de composition glacée ne soit fragilisé, malgré le fait que ce dernier ne puisse être tenu que par la couronne du tore, c'est à dire dans une épaisseur relativement faible de composition glacée, par exemple d'environ 22 mm seulement.

L'invention concerne également un procédé de fabrication d'un article de confiserie glacée enrobé tel que décrit précédemment, caractérisé par les étapes suivantes:
1) On refroidit une composition glacée constituant le noyau de manière que sa surface soit à une température d'au plus - 40° C,
2) On trempe le noyau refroidi dans une pâte à frire liquide aérée meringuée,
3) On cuit le noyau enrobé pendant une durée et à une température permettant de frire l'enrobage et
4) On refroidit l'article à basse température de manière à le congeler et à le durcir.

Pour refroidir le noyau de composition glacée, on peut utiliser toute méthode de refroidissement poussé à très basse température. On trempe de préférence ce dernier dans l'azote liquide pendant une durée de 6 à 20 s. et de préférence pendant environ 10 s.

On l'enrobe ensuite d'une pâte liquide meringuée aérée telle que décrite précédemment, de préférence par trempage dans un bain de pâte.

La cuisson de la pâte peut avoir lieu par tout moyen de cuisson, par exemple par passage dans un four à convection, à infra-rouge, par contact d'une plaque ou d'une bande thermoconductrice, par exemple en acier chauffée ou encore par trempage dans l'huile chaude. Cette opération peut être conduite de préférence à environ 180° C pendant environ 40 à 60 s.

L'étape finale de congélation et de durcissement de l'ensemble constitué du noyau et de la pâte d'enrobage cuite peut avoir lieu par tout moyen assurant une température d'au plus - 40° C de part en part de l'enrobage et du noyau, par exemple dans un tunnel à ruisselement d'azote, de préférence pendant environ 30 min.

Les modes de réalisation particuliers décrits ci-après à titre d'exemples illustrent l'invention à l'aide du dessin annexé dans lequel:
La figure 1 est une vue de face de l'article et
La figure 2 est une coupe médiane longitudinale de l'article.

Dans les exemples, les parties et pourcentages sont pondéraux, sauf indication contraire.

### Exemple 1

Dans un mélangeur rapide, on mélange 28,4 parties de farine de blé ordinaire avec du sel, 2,2 parties de lait écrémé en poudre et 13,5 parties de sucre cristallisé, puis on y ajoute 6,8 parties d'oeuf entier liquide pasteurisé et 34,2 parties d'eau jusquà dispersion complète des poudres dans le liquide. On ajoute ensuite 4,5 parties d'huile de tournesol que l'on mélange bien pour obtenir une pâte liquide homogène.

On monte séparément une meringue à partir de 62,5 parties de blanc d'oeuf pasteurisé et de 37,5 parties de sucre cristallisé au batteur à vitesse moyenne jusqu'à obtenir une consistance ferme du mélange, dont la densité est environ 0,2 g/cm3.

On incorpore alors 10 parties de meringue dans la pâte liquide précédente pour obtenir une pâte à frire fluide, aérée et homogène, de densité 0,9 g/cm3 et dont le foisonnement est 34 % en volume.

On extrude un boudin creux de crème glacée à la vanille, à environ - 5° C, que l'on découpe en tranches en forme de tore dans la couronne duquel on insère un bâtonnet plat et l'on obtient ainsi une ébauche. Après refroidissement de l'ébauche dans un tunnel de congélation jusqu'à - 30° C à coeur, on la reprend par le bâtonnet et on la plonge dans un bain d'azote liquide pendant 5 s. Après un temps d'attente de 4 s, on trempe l'ébauche dans la pâte à frire aérée pendant 5 s et, après un temps d'attente de 20 s, on plonge l'ébauche enrobée d'un film continu de pâte d'épaisseur homogène dans une huile de tournesol à 180° C pendant 45 s de manière à la frire. Après une attente de 15s, on place l'article frit sur une plaque froide et on la fait passer dans un tunnel de refroidissement à l'azote à - 40° C pendant 30 min., puis on l'enveloppe dans un emballage "flow-pack" et on le durcit à - 30° C à coeur dans une enceinte de congélation.

L'article obtenu est entièrement enrobé d'une pâte continue, répartie de manière homogène sur toute la surface du tore selon une épaisseur constante et cuite uniformément.

### Exemple 2

On procède comme à l'exemple 1, mis à part le fait que l'on produit la pâte meringuée par incorporation directe de 0,5 partie de cellulose modifiée, de 4 parties de blanc d'oeuf et de 0,4 partie de gomme xanthane en remplacement des 10 parties de meringue de l'exemple 1 aux autres ingrédients et que l'on bat la pâte de manière à l'aérer, de sorte que sa densité est 0,95 g/cm3 et son foisonnement 30 % en volume.

L'article obtenu est entièrement enrobé d'une pâte continue, répartie de manière homogène sur toute la surface du tore selon une épaisseur constante et cuite uniformément.

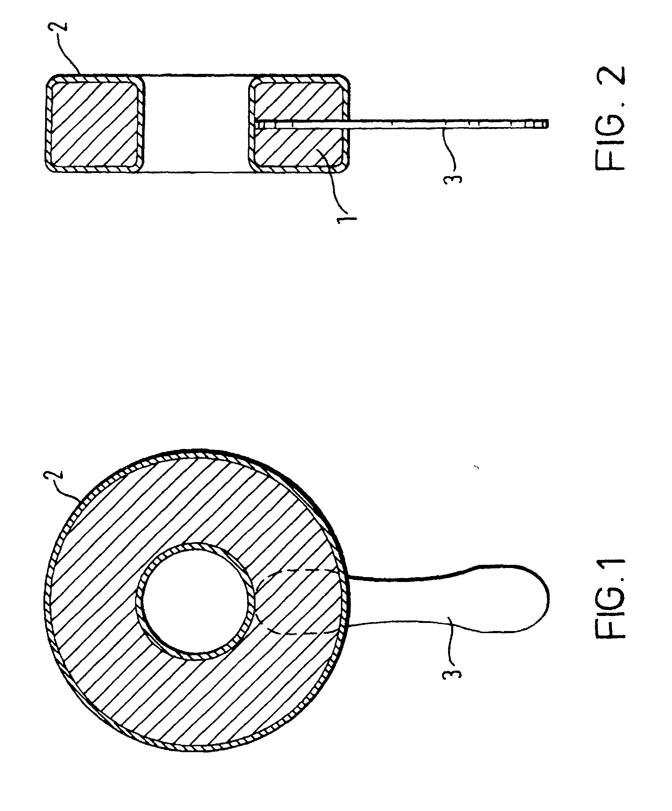

Aux figures 1 et 2, l'article comprend un noyau 1 de crème glacée en forme de tore uniformément enrobé d'une couche de pâte cuite 2. Un bâtonnet de préhension 3 en forme de spatule est ancré dans toute l'épaisseur du noyau de crème glacée et affleure à l'enrobage de pâte.

## Revendications

1. Article de confiserie glacée **caractérisé par le fait qu'**il est constitué:
- d'un noyau de composition glacée et
- d'un enrobage adhérant à la surface dudit noyau,
que ledit enrobage comprend une pâte cuite aérée contenant de la meringue,
que ladite pâte est foisonnée de 20 à 150 % en volume et qu'elle a une densité de 0,45 à 0,95 g/cm³ avant cuisson,
que ladite pâte a une épaisseur telle qu'elle forme une barrière thermique qui protége le noyau pendant la friture de la pâte dans une huile à 180° C pendant 45s. et que ladite pâte est congelée après avoir été frite.

2. Article selon la revendication 1, **caractérisé par le fait qu'**il est constitué d'une sucette comprenant un noyau dont la forme comporte des parties concaves c'est-à-dire en creux et qu'il comprend un bâtonnet de préhension.

3. Article selon la revendication 2, **caractérisé par le fait que** la sucette est un beignet de forme torique.

4. Article selon la revendication 1, **caractérisé par le fait que** la pâte à frire est une pâte à beignet ou à crêpe à base de farine, d'oeuf, de lait, de sucre, d'huile, d'eau et de sel et que la dite pâte comprend 5 à 30 % en poids de meringue ajoutée, la dite meringue étant constituée d'un mélange de blanc d'oeuf et de sucre contenant, de préférence de 30 à 40 % en poids de sucre pour 60 à 70 % en poids de blanc d'oeuf.

5. Article selon la revendication 1, **caractérisé par le fait que** le meringuage est créé directement au sein même de la pâte au moyen d'un mélange de cellulose modifiée et/ou d'hydrocolloïdes.

6. Article selon la revendication 1, **caractérisé par le fait que** la pâte d'enrobage a une densité d'environ 0,9 g/cm3.

7. Procédé de fabrication d'un article de confiserie glacée enrobé selon la revendication 1, **caractérisé par** les étapes suivantes:
1) On refroidit une composition glacée constituant le noyau de manière que sa surface soit à une température d'au plus - 40° C,
2) On trempe le noyau refroidi dans une pâte à frire liquide aérée meringuée,
3) On cuit le noyau enrobé pendant une durée et à une température permettant de frire l'enrobage et
4) On refroidit l'article à basse température de manière à le congeler et à le durcir.

8. Procédé selon la revendication 7, **caractérisé par le fait que** l'on refroidit le noyau de composition glacée par trempage dans l'azote liquide pendant une durée de 6 à 20 s. et de préférence pendant environ 10 s.

9. Procédé selon la revendication 7, **caractérisé par le fait que** l'on enrobe le noyau refroidi d'une pâte liquide meringuée aérée par trempage dans un bain de pâte.

10. Procédé selon la revendication 7, **caractérisé par le fait que** l'étape finale de congélation et de durcissement de l'ensemble constitué du noyau et de la pâte d'enrobage cuite a lieu par tout moyen assurant une température d'au plus - 40° C de part en part de l'enrobage et du noyau.

## Patentansprüche

1. Eiskonfektartikel, **dadurch gekennzeichnet, daß** er
- aus einem Kern aus Eiszusammensetzung und
- aus einer an der Oberfläche des Kerns haftenden Umhüllung besteht,
daß die Umhüllung einen belüfteten gegarten Teig umfaßt, der Baiser enthält,
daß der Teig um 20 bis 150 Vol.-% expandiert ist und daß er eine Dichte von 0,45 bis 0,95 g/cm³ vor dem Garen besitzt,
daß der Teig eine solche Dicke besitzt, daß er eine thermische Sperre bildet, die den Kern während des Frittierens des Teigs in Öl mit 180°C während 45 s schützt,
und daß der Teig nach dem Frittieren tiefgefroren wird.

2. Artikel nach Anspruch 1, **dadurch gekennzeichnet, daß** er aus einem Lutscher besteht, der einen Kern aufweist, dessen Form konkave Teile, d.h. ausgehöhlte Teile, aufweist, und daß er einen Griffstiel besitzt.

3. Artikel nach Anspruch 2, **dadurch gekennzeichnet, daß** der Lutscher ein Krapfen von torischer Form ist.

4. Artikel nach Anspruch 1, **dadurch gekennzeichnet, daß** der zu frittierende Teig ein Krapfen- oder Pfannkuchenteig auf der Basis von Mehl, Ei, Milch, Zucker, Öl, Wasser und Salz ist und daß der Teig 5 bis 30 Gew.-% zugesetztes Baiser umfaßt, wobei das Baiser aus einer Mischung von Eiweiß und Zucker besteht, die vorzugsweise 30 bis 40 Gew.-% Zucker auf 60 bis 70 Gew.-% Eiweiß enthält.

5. Artikel nach Anspruch 1, **dadurch gekennzeichnet, daß** die Baiserbildung direkt im Inneren des Teigs mit Hilfe einer Mischung von modifizierter Cellulose und/oder Hydrocolloiden bewirkt wird.

6. Artikel nach Anspruch 1, **dadurch gekennzeichnet, daß** der Umhüllungsteig eine Dichte von etwa 0,9 g/cm³ besitzt.

7. Verfahren zur Herstellung eines umhüllten Eiskonfektartikels nach Anspruch 1, **gekennzeichnet durch** die folgenden Schritte:
1) man kühlt eine den Kern bildende Eiszusammensetzung so, daß ihre Oberfläche auf einer Temperatur von höchstens -40°C ist,
2) man taucht den gekühlten Kern in einen zu frittierenden belüfteten flüssigen Baiserteig,
3) man gart den umhüllten Kern während einer Zeit und bei einer Temperatur, die die Frittierung der Umhüllung gestatten, und
4) man kühlt den Artikel auf eine niedrige Temperatur so, daß er tiefgefroren und gehärtet wird.

8. Verfahren nach Anspruch 7, **dadurch gekennzeichnet, daß** man den Kern aus Eiszusammensetzung durch Eintauchen in flüssigen Stickstoff während einer Zeit von 6 bis 20 s und vorzugsweise während etwa 10 s kühlt.

9. Verfahren nach Anspruch 7, **dadurch gekennzeichnet, daß** man den gekühlten Kern mit einem belüfteten flüssigen Baiserteig durch Eintauchen in ein Teigbad umhüllt.

10. Verfahren nach Anspruch 7, **dadurch gekennzeichnet, daß** der letzte Schritt des Tiefgefrierens und des Härtens der aus dem Kern und dem gegarten Umhüllungsteig gebildeten Einheit mit jedem Mittel stattfindet, das eine Temperatur von höchstens - 40°C in der Umhüllung und im Kern gewährleistet.

## Claims

1. Article of frozen confectionery **characterized in that** it consists of:
- a core of frozen composition and
- a coating adhering to the surface of the said core,
wherein the said coating comprises an aerated cooked batter containing meringue,
wherein the said batter is expanded by 20 to 150 % in volume and has a density of 0.45 to 0.95 g/cm³ before cooking,
wherein the said batter has a thickness such that it forms a thermal barrier which protects the core while the batter is fried in oil at 180°C for 45 s, and
wherein the said batter is f rozen after being fried.

2. Article according to claim 1, **characterized in that** it consists of a lolly comprising a core of which the shape includes concave parts, namely hollow parts, and **in that** it includes a stick for holding it.

3. Article according to claim 2, **characterized in that** the lolly is a toroid-shaped fritter.

4. Article according to claim 1, **characterized in that** the batter to be fried is a fritter or crêpe batter based on flour, eggs, milk, sugar, oil, water and salt and **in that** the said batter includes 5 to 30 weight % of added meringue, the said meringue consisting of a mixture of egg white and sugar preferably containing 30 to 40 weight % of sugar for 60 to 70 weight % of egg white.

5. Article according to claim 1, **characterized in that** the meringue is created directly within the batter itself by means of a mixture of modified cellulose and/or hydrocolloids.

6. Article according to claim 1, **characterized in that** the enrobing batter has a density of approximately 0.9 g/cm³.

7. Method for producing a coated frozen confectionery according to claim 1, **characterized by** the following steps:
1) A frozen composition consisting of the core is cooled so that the surface has a temperature no greater than -40°C,
2) The cooled core is dipped in an aerated liquid frying batter made into a meringue,
3) The enrobed core is cooked for a period and at a temperature enabling the coating to be fried and
4) The article is cooled to a low temperature so as to freeze and harden it.

8. Method according to claim 7, **characterized in that** the core of frozen composition is cooled by dipping it in liquid nitrogen for a period of 6 to 20 s, preferably for approximately 10 s.

9. Method according to claim 7, **characterized in that** the cooled core is enrobed with an aerated liquid batter, made into a meringue, by dipping into a bath of batter.

10. Method according to claim 7, **characterized in that** the final step of freezing and hardening the assembly consisting of the core and the cooked enrobing batter is carried out by any means providing a temperature no higher than -40°C right through the coating and the core.
